# FASCICULE DE BREVET EUROPEEN

(11) **EP 1 874 623 B1**
(45) Date de publication et mention de la délivrance du brevet: **10.06.2009**
(21) Numéro de dépôt: 06743675.8
(22) Date de dépôt: 11.04.2006
(51) Int. Cl.: B64C 3/10

(54) **AERONEF A FAIBLE BRUIT, NOTAMMENT LORS DES DECOLLAGES ET DES ATTERRISSAGES**
LÄRMARMES FLUGZEUG, BEISPIELSWEISE BEIM START UND BEI DER LANDUNG
AIRCRAFT WITH LOW NOISE, SUCH AS DURING TAKE-OFF AND LANDING

(30) Priorité: 28.04.2005 FR 0504281
(43) Date de publication de la demande: 09.01.2008
(73) Titulaire: AIRBUS France, 31060 Toulouse (FR)
(72) Inventeur: CROS, Christophe, F-31240 L'Union (FR)
(74) Mandataire: Bonnetat, Christian
(86) Numéro de dépôt international: PCT/FR2006/000795
(87) Numéro de publication internationale: WO 2006/114493

(56) Documents cités:
- US-A- 3 936 017
- US-A- 6 116 539
- STEINKE S: "AUS DER TRICKKISTE DER FLUGZEUGENTWICKLER AIRBUS-KONZEPTE FUER UEBERMORGEN" FLUG REVUE, STUTTGART, DE, vol. 1/2001, janvier 2001 (2001-01), pages 22-25, XP009053625

## Description

La présente invention concerne un aéronef à faible bruit, notamment lors des décollages et des atterrissages.

Par exemple par le document US-A-3 936 017, on connaît déjà un aéronef comportant :
- un fuselage ;
- deux ailes disposées latéralement par rapport audit fuselage et ne portant aucun moteur ;
- un empennage vertical arrière constitué d'au moins deux dérives et formant, avec la partie arrière dudit fuselage, un canal disposé sur le dos de celui-ci ; et
- au moins un turbomoteur disposé sur le dos dudit fuselage de façon que les flux de gaz engendrés par ledit turbomoteur pénètrent dans ledit canal.

Ainsi, grâce à la conception des empennages arrière sous la forme d'un canal et à l'agencement des turbomoteurs à l'entrée du canal, on peut réduire considérablement le bruit aval (c'est-à-dire essentiellement le bruit engendré vers l'arrière par les parties tournantes des turbomoteurs et le bruit de combustion), puisque ce bruit aval est aspiré par le canal et s'évacue le long de celui-ci, vers le haut loin du fuselage, c'est-à-dire loin des passagers situés à l'arrière de la cabine de l'aéronef et a fortiori des riverains des aéroports. Le bruit aval engendré par les turbomoteurs est ainsi masqué par les empennages arrière du fuselage qui constituent un écran acoustique.

En ce qui concerne la réduction du bruit amont (c'est-à-dire essentiellement le bruit engendré vers l'avant par la soufflante des turbomoteurs), le document US-A-3 936 017 prévoit, d'une part, d'allonger fortement vers l'avant les nacelles des turbomoteurs et, d'autre part, de disposer des volets mobiles entre les ailes de l'aéronef et lesdits turbomoteurs. Ainsi, lesdites ailes sont associées auxdits volets mobiles pour former un écran audit bruit amont.

On remarquera qu'un tel agencement est particulièrement complexe et que, de plus, il ne peut être mis en oeuvre que pour des aéronefs de petite longueur, car lesdites nacelles de turbomoteurs ne peuvent être allongées de façon exagérée sans nuire à l'aérodynamique de l'aéronef et aux performances des turbomoteurs.

L'objet de la présente invention est de remédier à ces inconvénients et de permettre la réduction du bruit amont de manière simple et efficace, même sur des aéronefs de grande longueur, notamment lors des décollages et des atterrissages.

A cette fin, selon l'invention, l'aéronef comportant :
- un fuselage ;
- deux ailes disposées latéralement par rapport audit fuselage et ne portant aucun moteur ;
- un empennage vertical arrière constitué d'au moins deux dérives et formant, avec la partie arrière dudit fuselage, un canal disposé sur le dos de celui-ci ; et
- au moins un turbomoteur disposé sur le dos dudit fuselage de façon que les flux de gaz engendrés par ledit turbomoteur pénètrent dans ledit canal et que le bruit aval dudit turbomoteur soit masqué latéralement et vers le bas par ledit canal,
est remarquable en ce que :
- lesdites ailes présentent une flèche inverse, et
- les emplantures desdites ailes sont disposées au voisinage de l'entrée d'air dudit turbomoteur de façon que le bruit amont engendré par celui-ci soit masqué latéralement et vers le bas par lesdites ailes.

La présente invention repose sur le fait que, puisque les ailes présentent une flèche inverse, il est possible, tout en conservant une qualité de vol satisfaisante (notamment quant à la position du foyer aérodynamique par rapport au centre de gravité de l'aéronef) de reculer suffisamment lesdites ailes le long du fuselage pour qu'elles masquent ledit bruit amont des turbomoteurs.

De plus, on remarquera que, grâce à la flèche inverse de ses ailes, l'aéronef présente d'excellentes performances en croisière, notamment en utilisant des techniques de laminarité.

Les figures du dessin annexé feront bien comprendre comment l'invention peut être réalisée. Sur ces figures, des références identiques désignent des éléments semblables.
La figure 1 est une vue en perspective, de l'arrière et du dessus, d'un avion conforme à la présente invention.
La figure 2 est une vue en plan de l'avion de la figure 1.

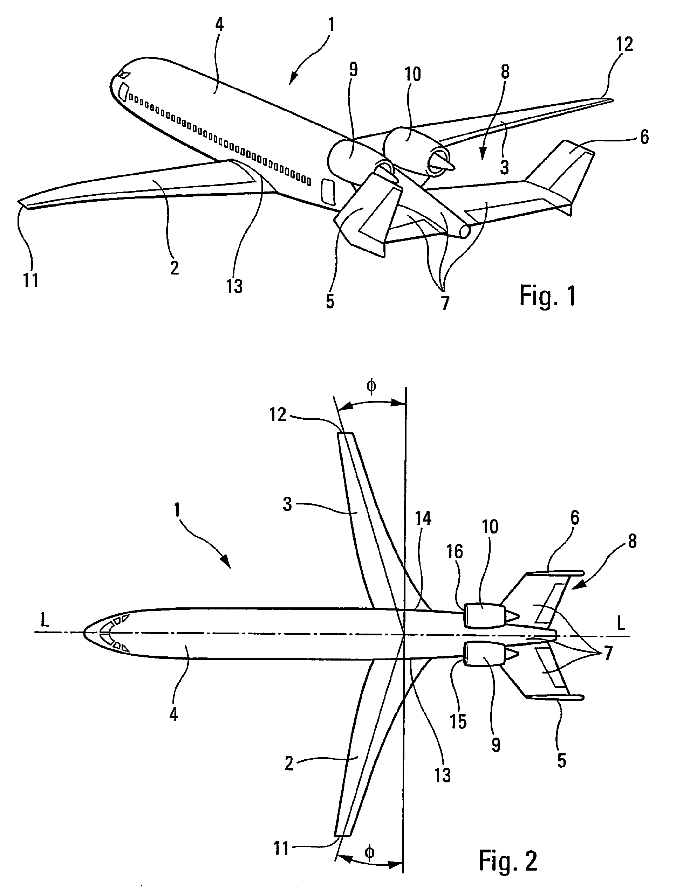

L'avion 1, montré schématiquement par les figures 1 et 2 et conforme à la présente invention, comporte deux ailes 2 et 3 disposées, latéralement et symétriquement, par rapport au fuselage 4, d'axe longitudinal L-L.

L'empennage vertical arrière de l'avion 1 comporte deux dérives 5 et 6 formant, avec la partie arrière 7 du fuselage 4 comprenant l'empennage horizontal de l'avion, un canal 8, disposé sur le dos dudit avion. Le canal 8 est ouvert vers le haut, mais fermé vers le bas (par ladite partie arrière 7) et latéralement (par les dérives 5 et 6).

Deux turbomoteurs 9 et 10 sont portés par le dos du fuselage 4 et sont disposés de façon que les flux de gaz engendrés par lesdits turbomoteurs pénètrent dans ledit canal 8. Ainsi, celui-ci sert d'écran acoustique, ce qui réduit, vers le bas et latéralement, le bruit aval engendré par les turbomoteurs 9 et 10.

Par ailleurs, les ailes 2 et 3 présentent une flèche φ inverse (c'est-à-dire que leurs extrémités libres 11, 12 sont plus en avant que leurs emplantures 13, 14 sur le fuselage 4) et lesdites emplantures 13, 14 occupent une position arrière par rapport audit fuselage 4 de façon à être disposées au voisinage des entrées d'air 15, 16 des turbomoteurs 9, 10. Dans ces conditions, le bruit amont engendré par lesdits turbomoteurs 9, 10 est masqué latéralement et vers le bas par les ailes 2, 3.

Ainsi, grâce aux dispositions décrites ci-dessus, l'avion 1 peut être particulièrement silencieux, notamment lors des décollages et des atterrissages, puisque les bruits aval et amont des turbomoteurs 9, 10 sont respectivement masqués par les empennages 5, 6, 7 et par les ailes 2, 3. De plus, ses performances en vol de croisière sont excellentes, du fait de la flèche inverse desdites ailes.

## Revendications

1. Aéronef comportant :
- un fuselage (4) ;
- deux ailes (2,3) disposées latéralement par rapport audit fuselage (4) et ne portant aucun moteur ;
- un empennage vertical arrière constitué d'au moins deux dérives (5, 6) et formant, avec la partie arrière (7) dudit fuselage (4), un canal (8) disposé sur le dos de celui-ci ; et
- au moins un turbomoteur (9, 10) disposé sur le dos dudit fuselage (4) de façon que les flux de gaz engendrés par ledit turbomoteur (9, 10) pénètrent dans ledit canal (8) et que le bruit aval dudit turbomoteur (9,10) soit masqué latéralement et vers le bas par ledit canal,
**caractérisé en ce que :**
- lesdites ailes (2,3) présentent une flèche (φ) inverse ; et
- les emplantures (13, 14) desdites ailes (2, 3) sont disposées au voisinage de l'entrée d'air (15, 16) dudit turbomoteur (9, 10) de façon que le bruit amont engendré par celui-ci soit masqué latéralement et vers le bas par lesdites ailes (2,3).

## Claims

1. An aircraft comprising:
- a fuselage (4);
- two wings (2, 3) disposed laterally with respect to said fuselage (4) and not supporting any engines;
- a vertical rear tail unit constituted by at least two fins (5, 6) and forming, with the rear part (7) of said fuselage (4), a channel (8) disposed on the back of the latter; and
- at least one turboshaft engine (9, 10) disposed on the back of said fuselage (4) such that the gas flows generated by said turboshaft engine (9, 10) enter said channel (8) and that the downstream noise of said turboshaft engine (9, 10) is masked laterally and downwardly by said channel,
**characterized in that:**
- said wings (2, 3) have a reverse sweep (φ), and
- the root sections (13, 14) of said wings (2, 3) are disposed close to the air intake (15, 16) of said turboshaft engine (9, 10) such that the upstream noise generated by the latter is masked laterally and downwardly by said wings (2, 3).

## Patentansprüche

1. Flugzeug, Folgendes umfassend:
- einen Rumpf (4),
- zwei Flügel (2,3), die seitlich des Rumpfes (4) angeordnet sind und keinen Motor tragen,
- ein hinteres vertikales Seitenleitwerk, das aus mindestens zwei Seitenflossen (5, 6) besteht und mit dem hinteren Teil (7) des Rumpfes (4) einen auf dessen Rücken angeordneten Kanal (8) bildet und
- mindestens ein Triebwerk (9, 10), das derart auf dem Rücken des Rumpfes (4) angeordnet ist, dass die von dem Triebwerk (9, 10) erzeugten Gasströme in den Kanal (8) eindringen und dass der stromabwärtige Lärm des Triebwerks (9, 10) durch den Kanal in Querrichtung und nach unten verdeckt wird,
**dadurch gekennzeichnet, dass:**
- die Flügel (2,3) eine umgekehrte Pfeilung (ϕ) aufweisen und
- die Wurzeln (13, 14) der Flügel (2, 3) in der Nähe des Lufteinlasses (15, 16) des Triebwerks (9, 10) angeordnet sind, so dass der von diesem erzeugte stromaufwärtige Lärm in Querrichtung und nach unten von den Flügeln (2,3) verdeckt wird.
